# EUROPEAN PATENT APPLICATION

(11) **EP 2 698 558 A1**
(43) Date of publication of application: **19.02.2014**
(21) Application number: 11863483.1
(22) Date of filing: 14.11.2011
(51) Int. Cl.: F16F 7/12, B60R 19/24, B60R 19/34

(54) **IMPACT ABSORPTION MEMBER**

(30) Priority: 14.04.2011 JP 2011090154
(71) Applicant: Toyota Shatai Kabushiki Kaisha, Kariya-shi, Aichi-ken 448-0002 (JP)
(72) Inventor: OKUDA Nobuhisa, Kariya-shi, Aichi 448-0002 (JP)
(74) Representative: Chettle, Adrian John
(86) International application number: PCT/JP2011/076152
(87) International publication number: WO 2012/140803

(57) **Abstract**

It is an object of the present invention to make it possible to effectively absorb a high load generated in the event of a vehicle collision in a simplified structure.

A shock-absorbing member may include a cylindrical member (20) configured to receive an impact load applied axially and capable of being axially compressed by the impact load, a wood member (12) received within the cylindrical member (20) without contacting each other and having an impact load-resistance strength greater than the cylindrical member (20), and a foam material (30) capable of positioning the wood member (12) with respect to the cylindrical member (20) and filled in a clearance formed between an outer surface of the wood member (12) and an inner wall surface of the cylindrical member (20) partially or over the entirety thereof by foaming. The foamed foam material (30) has a strength that does not prevent the cylindrical member (20) from radially inwardly deforming when the cylindrical member (20) is axially compressed with the wood member (12) by the impact load.

## Description

### TECHNICAL FIELD

The present invention relates to a shock-absorbing member that is configured to be capable of receiving an impact load generated in the event of a vehicle collision or other such accidents and effectively absorbing the impact load.

### BACKGROUND ART

Patent Document 1 discloses art relating to a shock-absorbing member that is configured to be capable of receiving an impact load generated in the event of a vehicle collision or other such accidents and absorbing the impact load.

As shown in FIG. 9, a shock-absorbing member 100 described in Patent Document 1 is composed of an aluminum alloy cylindrical housing 102 and a high rigidity foamed elastic body 104 that is received within the housing 102. The shock-absorbing member 100 may be used for a bumper, a door impact beam or other such devices of a vehicle, so as to receive an impact load generated in the event of a vehicle collision by a side surface of the cylindrical housing 102 and to absorb the impact load and vibration energy.

### PRIOR ART DOCUMENT

### PATENT DOCUMENT

Patent Document 1: Japanese Laid-Open Patent Publication No. 2001-246995

### SUMMARY OF THE INVENTION

### PROBLEMS TO BE SOLVED BY THE INVENTION

In the shock-absorbing member 100 described above, the impact load of the vehicle can be largely received by the housing 102. That is, the impact load cannot be received only by the foamed elastic body 104. Therefore, in a situating where the shock-absorbing member 100 is used under a high load condition, the cylindrical housing 102 must be increased in strength. Therefore, it is necessary to take measures such as increasing a wall thickness of the housing 102, or dividing an interior portion of the housing 102 into a plurality of compartments using partitions or other such members. As a result, the shock-absorbing member 100 may not only increase in weight but also become more structurally complicated. This may lead to increased costs.

The present invention has been made in order to solve the problems described above. Accordingly, it is an object of the present invention to make it possible for a simplified structure to effectively absorb a high load generated in the event of a vehicle collision.

### MEANS FOR SOLVING THE PROBLEM

The above problems can be solved by the invention as described in each of the claims.

A shock-absorbing member defined in claim 1 may include a cylindrical member configured to receive an impact load axially applied and capable of being axially compressed by the impact load, a wood member received within the cylindrical member without contacting it and having an impact load-resistance strength greater than the cylindrical member, and a foam material capable of positioning the wood member with respect to the cylindrical member and filled in a clearance formed between an outer surface of the wood member and an inner wall surface of the cylindrical member partially or over the entirety thereof by foaming. The foamed foam material has a strength that does not prevent the cylindrical member from radially inwardly deforming when the cylindrical member is axially compressed with the wood member by the impact load.

According to the present invention, the wood member received in the cylindrical member may have an impact load-resistance strength greater than the cylindrical member. Therefore, the impact load can be received principally by the wood member. Further, because the foamed foam material is filled between the outer surface of the wood member and the inner wall surface of the cylindrical member, the wood member can be securely positioned with respect to the cylindrical member without contacting it. Further, when the cylindrical member is axially compressed with the wood member due to the impact load, the foam material may not prevent the cylindrical member from being deformed radially inwardly. As a result, the cylindrical member can be compressed into the bellows-shape around the wood member. Thus, the wood member can be circumferentially supported by the cylindrical member compressed into the bellows-shape in a balanced manner, so as to be less likely to collapse. As a result, the load axially applied can be effectively received by the wood member. Thus, the wood member and the cylindrical member can be axially compressed, so that a large load can be effectively absorbed.

Further, the shock-absorbing member can be formed by simply introducing the wood member into the cylindrical member. Also, the wood member can be appropriately positioned with respect to the cylindrical member by the foam material. Therefore, the shock-absorbing member can be simplified in structure, so as to decrease costs.

In the invention of claim 2, the foamed foam material is filled in the clearance formed between the outer surface of the wood member and the inner wall surface of the cylindrical member over the entirety thereof.

Therefore, the wood member can be securely positioned with respect to the cylindrical member. Further, even when a vehicle vibration or other such vibrations are applied to the shock-absorbing member, vibrations generated between the wood member and the cylindrical member can be eliminated.

In the invention of claim 3, the foam material has an expansion ratio of 5-fold to 30-fold.

Therefore, the foamed foam material may have the strength close to the minimum strength that is required to position the wood member with respect to the cylindrical member. Therefore, when the cylindrical member is compressed with the wood member due to the impact load, the foam material may not prevent the cylindrical member from radially inwardly deforming.

In the invention of claim 4, the cylindrical member has a rectangular cylindrical shape. The wood member has a rectangular columnar shape. Further, the foam material has a uniform thickness.

Therefore, the wood member and the cylindrical member can be circumferentially uniformly compressed.

In the invention of claim 5, the cylindrical member is an aluminum alloy molded article. The wood member is a cedar wood member. Further, the foam material is a rigid urethane foam.

In the invention of claim 6, a wall thickness of the cylindrical member is a range from about 0.4 mm to about 1.1 mm. Further, a thickness of the foam material is set to a range from about 2 mm to about 4 mm.

Therefore, a large load can be effectively received by the wood member. In addition, the cylindrical member can be compressed into the bellows-shape around the wood member, so as to circumferentially effectively support the wood member.

### EFFECTS OF THE INVENTION

According to the present invention, it is possible to effectively absorb a high load generated in the event of a vehicle collision without a complicated a structure.

### BRIEF DESCRIPTION OF THE DRAWINGS

FIG. 1 is a schematic plan view of a vehicle front portion having a shock-absorbing member according to Embodiment 1 of the present invention.
FIG. 2 is an entire perspective view of the shock-absorbing member according to Embodiment 1 of the present invention.
FIG. 3 is a sectional view taken along line III-III of FIG. 2.
FIG. 4 is a set of views which includes a schematic perspective view (Figure A) of the shock-absorbing member, which view illustrates a condition in which the shock-absorbing member is axially compressed by an impact load applied thereto, a sectional view (Figure B) taken along line B-B of Figure A, a sectional view (Figure C) taken along line C-C of Figure A, a sectional view (Figure D) taken along line D-D of Figure A or Figure B, and a sectional view (Figure E) taken along line E-E of Figure B.
FIG. 5 is a set of measured data (Figure A, Figure B and Figure C) illustrating a relationship between an impact load applied to the shock-absorbing member and a compressing amount (stroke) of the shock-absorbing member.
FIG. 6 is a schematic horizontal sectional view of a shock-absorbing member according to a modified form.
FIG. 7 is a schematic horizontal sectional view of a shock-absorbing member according to a modified form.
FIG. 8 is a schematic vertical sectional view of a shock-absorbing member according to a modified form.

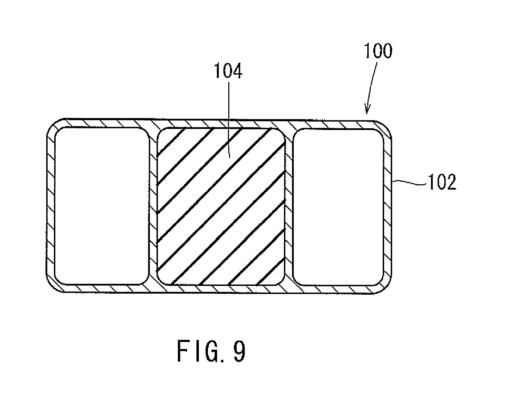

FIG. 9 is a horizontal sectional view of a conventional shock-absorbing member.

### MODE FOR CARRYING OUT THE INVENTION

### [Embodiment 1]

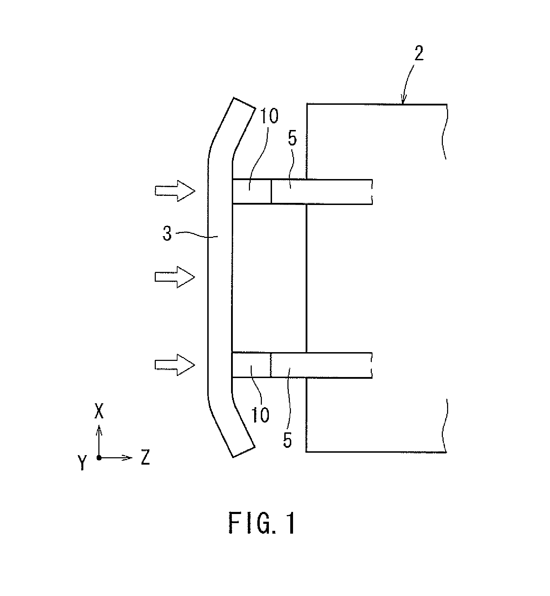

In the following, a shock-absorbing member according to Embodiment 1 of the present invention will be described with reference to FIG. 1 to FIG. 8.

Further, an X-direction (a horizontal direction), a Y-direction (a vertical direction) and a Z-direction (a longitudinal direction) in the drawings respectively correspond to a width direction, a height direction and a front-back direction of a vehicle to which the shock-absorbing member is attached.

### <Regarding the Outline of Attaching Portion of the Shock-Absorbing Member 10>

A shock-absorbing member 10 according to the present embodiment may be a member that is capable of receiving an impact load generated in the event of a vehicle collision and absorbing the impact load. As shown in FIG. 1, the shock-absorbing member 10 may be attached to each of crushable boxes that are disposed between a bumper reinforcement member 3 of a front bumper (not shown) and right and left side members 5 of a vehicle 2.

### <Regarding the Structure of the Shock-Absorbing Member 10>

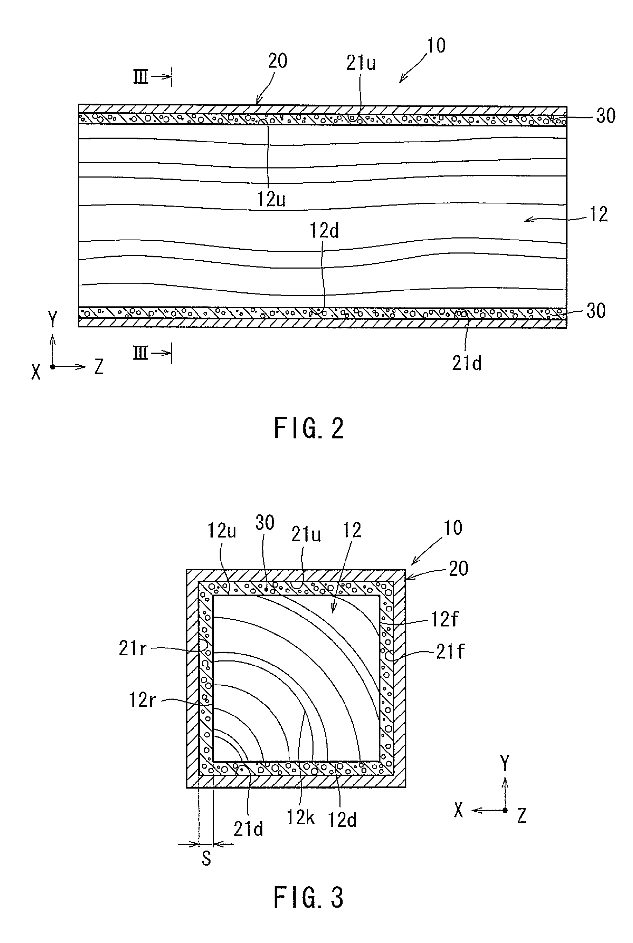

As shown in FIG. 2 and FIG. 3, the shock-absorbing member 10 may be composed of a cylindrical member 20, a wood member 12 coaxially received within the cylindrical member 20 without contacting to each other, and a foamed foam material 30 that is filled in a clearance formed between the cylindrical member 20 and the wood member 12.

The cylindrical member 20 may be an aluminum alloy molded article formed by extrusion molding. As shown in FIG. 3, the cylindrical member 20 may have a rectangular cylindrical shape having a square shaped cross-section in a direction perpendicular to an axis thereof (in horizontal cross-section).

Further, vertical (Y-direction) and horizontal (X-direction) sizes of the cylindrical member 20 may respectively be set to approximately 47 mm. A length (Z-direction) of the cylindrical member 20 may be set to approximately 70 mm. Also, a wall thickness of the cylindrical member 20 may be set to approximately 0.5 mm. Further, the wall thickness of the cylindrical member 20 may preferably be set to a range from approximately 0.4 mm to 1.1 mm.

As shown in FIG. 2 and FIG. 3, the wood member 12 may have a rectangular columnar shape having a square shape in horizontal cross-section. The wood member 12 may be configured such that vertical (Y-direction) and horizontal (X-direction) sizes thereof are smaller than the vertical and horizontal sizes of the cylindrical member 20 by a predetermined size. That is, in a condition in which the wood member 12 is introduced into the cylindrical member 20 and coaxially and concentrically positioned with respect to the cylindrical member 20, a clearance S having a constant size can be formed between the cylindrical member 20 and the wood member 12. The clearance is formed between an inner wall upper surface 21u and an upper surface 12u, between an inner wall lower surface 21d and a lower surface 12d, between an inner wall left side surface 21f and a left side surface 12f, and between an inner wall right side surface 21r and a right side surface 12r. Further, the vertical (Y-direction) and horizontal (X-direction) sizes of the wood member 12 may be set such that the clearance S may be approximately 3 mm.

Further, a length (Z-direction) size of the wood member 12 may be set to be identical to the axial length (approximately 70 mm) of the cylindrical member 20.

The wood member 12 may have the rectangular columnar shape while an axial direction of annual rings 12k thereof may be aligned with a longitudinal direction (axial direction) thereof. Therefore, in a condition in which the wood member 12 is introduced into the cylindrical member 20, the axial direction of the annual rings 12k of the wood member 12 may substantially be identical to an axial direction of the cylindrical member 20.

Further, a cedar wood member may preferably be used as the wood member 12.

### <Regarding the Foam Material 30>

The foam material 30 may be provided as a member that functions to coaxially and concentrically position the wood member 12 with respect to the cylindrical member 20 and to support the wood member 12 with respect to the cylindrical member 20 so as to not produce backlash therebetween. A rigid urethane foam that is foamed 5-fold to 30-fold may preferably be used as the foam material 30.

In order to fill the clearance S formed between the wood member 12 and the cylindrical member 20 with the foam material 30, in the condition in which the wood member 12 is coaxially and concentrically positioned with respect to the cylindrical member 20, the foamed rigid urethane foam may be filled in the clearance S formed between the wood member 12 and the cylindrical member 20 by spray or other such methods. Thus, upon solidification of the rigid urethane foam, the wood member 12 can securely be coaxially and concentrically positioned with respect to the cylindrical member 20 without looseness. As previously described, the clearance S formed between the wood member 12 and the cylindrical member 20 may be constant in a circumferential direction thereof, and may be set to approximately 3 mm. As a result, a thickness of the foam material 30 may be constant in a circumferential direction thereof, and may be approximately 3 mm.

Further, instead of filling the clearance S formed between the wood member 12 and the cylindrical member 20 with the rigid urethane foam by spray or other such methods, it is possible to mix a base compound of the rigid urethane foam and a curing agent while stirring the same so as to form a fluid raw material, and then to pour the raw material into the clearance S formed between the wood member 12 and the cylindrical member 20.

Further, although the rigid urethane foam is exemplified as the foam material 30, a polystyrene foam plate or other such members can be inserted into the clearance S formed between the wood member 12 and the cylindrical member 20 instead of the rigid urethane foam.

### <Regarding the Action of the Shock-Absorbing Member 10>

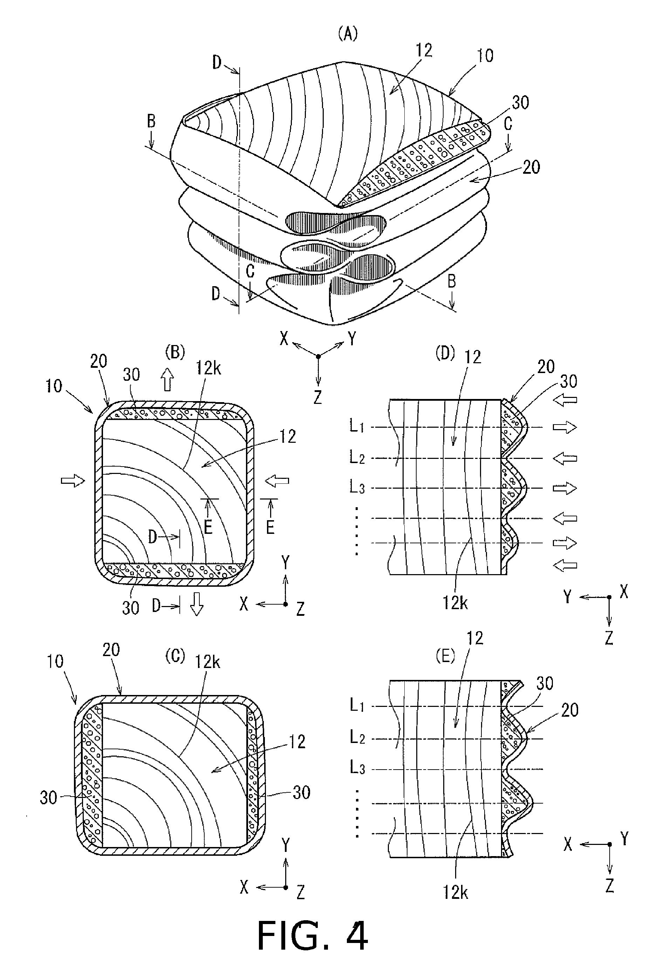

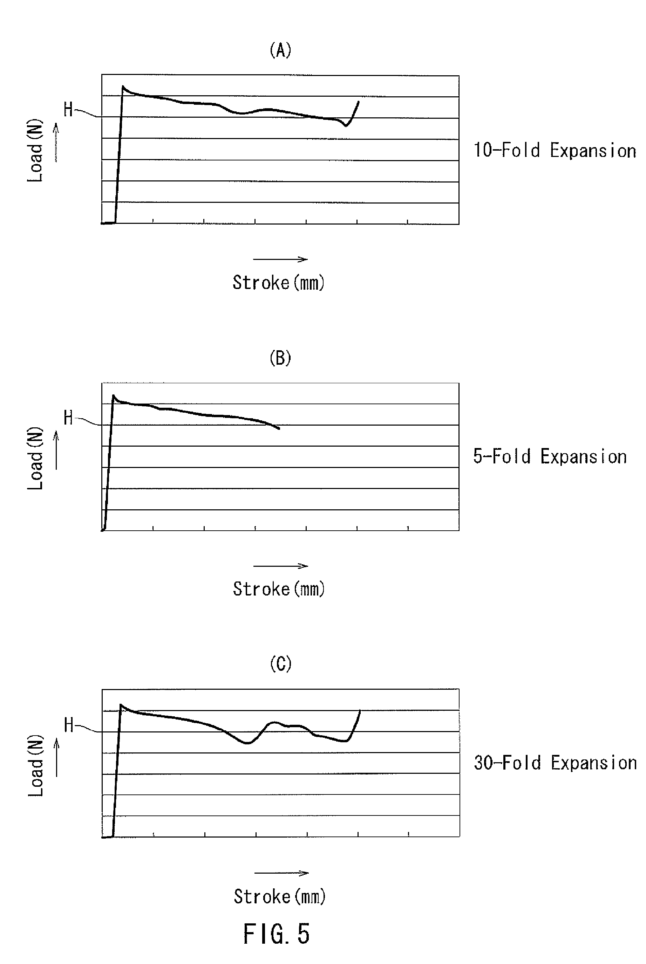

Next, action of the shock-absorbing member 10 will be described with reference to FIG. 4 and FIG. 5.

FIG. 5 (A) is measured data in a situation where the foam material 30 having an expansion ratio of 10-fold (a density of 0.09 g/cm³) is used. FIG. 5 (B) is measured data in a situation where the foam material 30 having an expansion ratio of 5-fold (a density of 0.14 g/cm³) is used. FIG. 5 (C) is measured data in a situation where the foam material 30 having an expansion ratio of 30-fold (a density of 0.03 g/cm³) is used. Further, in FIGS. 5 (A) to 5 (C), a vertical axis corresponds to a magnitude of the impact load. Conversely, a horizontal axis corresponds to an axially compressing amount (stroke) of the shock-absorbing member 10.

When a frontal collision occurs in the vehicle 2, an impact load is axially applied to the shock-absorbing member 10. As shown in FIGS. 5 (A) to 5 (C), when the impact load exceeds an acceptable value H (e.g., 5-6 × 10⁴ N), the shock-absorbing member 10 can be axially compressed, so that the impact load can be absorbed. That is, the wood member 12 and the cylindrical member 20 constituting the shock-absorbing member 10 can be applied with the impact load, so as to be axially compressed by the impact load.

As previously described, the clearance S may be formed between an outer surface of the wood member 12 and an inner wall surface of the cylindrical member 20. The clearance S may be uniform in the circumferential direction thereof, and may be approximately 3 mm. Further, the clearance S may be filled with the foamed foam material 30. The foam material 30 may be the rigid urethane foam that is foamed at the expansion ratio of 5-fold to 30-fold. Therefore, the foam material 30 may have a strength close to a minimum strength that is required to position the wood member 12 with respect to the cylindrical member 20. Therefore, as shown in FIGS. 4 (A) to 4 (E), when the cylindrical member 20 is compressed with the wood member 12, the foam material 30 may not prevent the cylindrical member 20 from radially inwardly deforming. As a result, as shown in FIGS. 4 (D) and 4 (E), the cylindrical member 20 can be compressed into a bellows-shape around the wood member 12.

That is, in a first bent position L1 of the shock-absorbing member 10 that is positioned adjacent to a distal end portion of the shock-absorbing member 10 (FIG. 4 (D)), as shown, for example, in FIG. 4 (B), an upper portion and a lower portion of the cylindrical member 20 can respectively be deformed radially outwardly whereas a left portion and a right portion of the cylindrical member 20 can respectively be deformed radially inwardly. Thus, in the first bent portion L1, the upper portion and the lower portion of the cylindrical member 20 can be expanded outwardly (FIGS. 4 (B) and 4 (D)) while the left portion and the right portion of the cylindrical member 20 can be depressed inwardly to contact the outer surface of the wood member 12 (FIGS. 4 (B) and 4 (E)).

Further, in a second bent position L2 that is positioned behind the first bent position L1, as shown in FIG. 4 (C), the upper portion and the lower portion of the cylindrical member 20 can respectively be depressed inwardly to contact the outer surface of the wood member 12 while the left portion and the right portion of the cylindrical member 20 can be expanded outwardly.

Further, in a third bent position L3 that is positioned behind the second bent position L2, the cylindrical member 20 can be deformed in a manner similar to the first bent position L1. Conversely, in a fourth bent position L4 that is positioned behind the third bent position L3, the cylindrical member 20 can be deformed in a manner similar to the second bent position L2.

That is, the cylindrical member 20 can be compressed into the bellows-shape around the wood member 12 while the upper portion and the lower portion thereof are offset from the left portion and the right portion by 90 degrees.

Thus, the cylindrical member 20 can be compressed into the bellows-shape around the wood member 12. Therefore, the cylindrical member 20 can prevent the wood member 12 from collapsing. As a result, the wood member 12 can be securely compressed axially. Therefore, as shown in FIG. 5, the impact load can be absorbed for the compressing stroke of the wood member 12.

Further, when the foam material 30 has an expansion ratio smaller than 5-fold, the foam material 30 may have a strength greater than an acceptable range. As a result, the foam material 30 may prevent the cylindrical member 20 from deforming radially inwardly, so that the cylindrical member 20 cannot be compressed into the bellows-shape. To the contrary, when the foam material 30 has an expansion ratio greater than 30-fold, the foam material 30 may have a strength smaller than the acceptable range. As a result, the foam material 30 cannot securely position the wood member 12 with respect to the cylindrical member 20. In addition, the foam material 30 may have a reduced vibration-resistance property.

### <Advantage of the Shock-Absorbing Member 10 of the Present Embodiment>

In the shock-absorbing member 10 of the present embodiment, the wood member 12 received in the cylindrical member 20 may have an impact load-resistance strength greater than the cylindrical member 20. Therefore, the impact load can be received principally by the wood member 12. Further, because the foamed foam material 30 is filled between the outer surface of the wood member 12 and the inner wall surface of the cylindrical member 20, the wood member 12 can be securely positioned with respect to the cylindrical member 20 without them contacting each other. Further, when the cylindrical member 20 is axially compressed with the wood member 12 due to the impact load, the foam material 30 may not prevent the cylindrical member 20 from being deformed radially inwardly. As a result, the cylindrical member 20 can be compressed into the bellows-shape around the wood member 12. Thus, the wood member 12 can be circumferentially supported by the cylindrical member 20 compressed into the bellows-shape in a balanced manner, so as to be less likely to collapse. As a result, the load axially applied can be effectively received by the wood member 12. Thus, the wood member 12 and the cylindrical member 20 can be axially compressed, so that a large load can be effectively absorbed.

Further, the shock-absorbing member can be formed by simply introducing the wood member 12 into the cylindrical member 20. Also, the wood member 12 can be appropriately positioned with respect to the cylindrical member 20 by the foam material 30. Therefore, the shock-absorbing member can be simplified in structure, so as to result in decreased cost.

Further, the foamed foam material 30 is filled in the clearance S between the outer surface of the wood member 12 and the inner wall surface of the cylindrical member 20 over the entirety thereof. Therefore, the wood member 12 can be securely positioned with respect to the cylindrical member 20. Further, even when vehicle vibrations or other such vibrations are applied to the shock-absorbing member 10, vibrations generated between the wood member 12 and the cylindrical member 20 can be eliminated.

Further, the expansion ratio of the foam material 30 may be set to a value from 5-fold and 30-fold. Therefore, the foamed foam material 30 may have the strength close to the minimum strength that is required to position the wood member 12 with respect to the cylindrical member 20. Therefore, when the cylindrical member 20 is compressed with the wood member 12 by the impact load, the foam material 30 may not prevent the cylindrical member 20 from radially inwardly deforming.

Further, the cylindrical member 20 may have the rectangular cylindrical shape. Conversely, the wood member 12 may have the rectangular columnar shape. Further, the foam material 30 has uniform thickness. Therefore, the wood member 12 and the cylindrical member 20 can be circumferentially uniformly compressed.

Further, the cylindrical member 20 may be the aluminum alloy molded article formed by extrusion molding. The wood member 12 may be the cedar wood member. The foam material 30 may be the rigid urethane foam that is foamed at the expansion ratio of 5-fold to 30-fold. Therefore, the large load can be effectively received by the wood member 12. In addition, the cylindrical member 20 can be compressed into the bellows-shape around the wood member 12, so as to circumferentially effectively support the wood member 12.

### <Modified Forms>

The present invention is not limited to the embodiment described above and can be changed or modified without departing from the scope of the present invention. In the present embodiment, the wood member 12 having the rectangular columnar shape may be inserted into the cylindrical member 20 having the rectangular cylindrical shape. Further, a thickness of the foam material 30 may be set to approximately 3 mm. However, the clearance S formed between the wood member 12 and the cylindrical member 20 may be set to a range from approximately 2 mm to approximately 4 mm. That is, the thickness of the foam material 30 may be set to a range from approximately 2 mm to approximately 4 mm.

Further, in the present embodiment, the wood member 12 having the rectangular columnar shape may be introduced into the cylindrical member 20 having the rectangular cylindrical shape such that they can be coaxially and concentrically positioned. However, it is acceptable to some extent to non-coaxially or eccentrically position the wood member 12 with respect to the cylindrical member 20, provided that the cylindrical member 20 and the wood member 12 do not contact to each other.

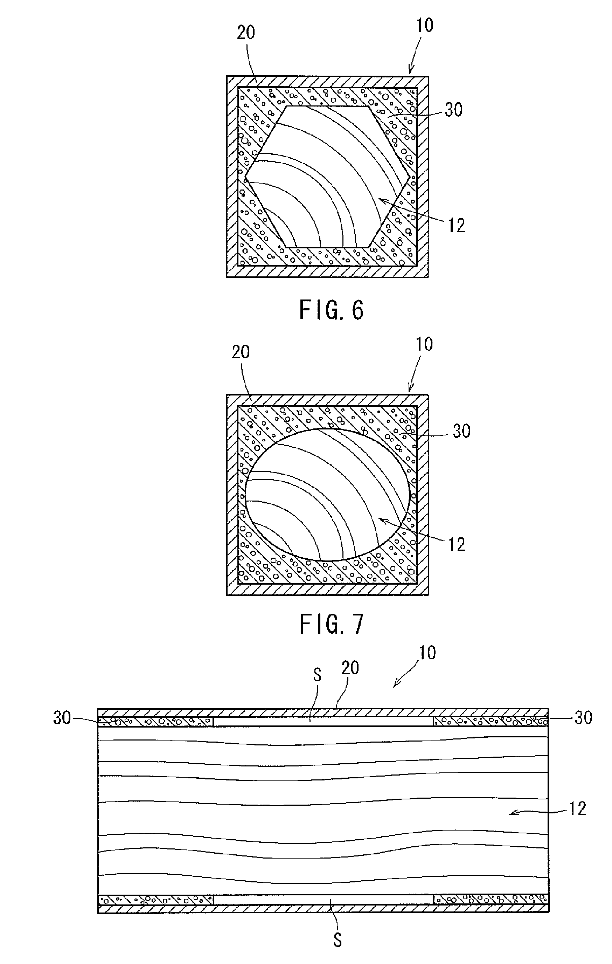

Further, a combination of the wood member 12 having the rectangular columnar shape and the cylindrical member 20 having the rectangular cylindrical shape is exemplified. However, as shown in FIG. 6, the wood member 12 having a hexagonal columnar shape can be combined with the cylindrical member 20 having the rectangular cylindrical shape. Alternatively, as shown in FIG. 7, the wood member 12 having an ellipsoidal columnar shape can be combined to the cylindrical member 20 having the rectangular cylindrical shape.

Further, as shown in FIG. 8, the foam material 30 can be partially filled in the clearance S between the wood member 12 and the cylindrical member 20, so as to be separately positioned axially at both end portions thereof.

Further, the aluminum alloy molded article formed by extrusion molding is used as the cylindrical member 20. However, the cylindrical member 20 can be formed by pultrusion molding using an aluminum extrusion grade material.

### DESCRIPTION OF SYMBOLS

- 10: shock-absorbing member
- 12: wood member
- 20: cylindrical member
- 30: foam material
- S: clearance

## Claims

1. A shock-absorbing member, comprising:
a cylindrical member configured to receive an impact load applied axially and capable of being axially compressed by the impact load,
a wood member received within the cylindrical member without contacting each other and having an impact load-resistance strength greater than the cylindrical member, and
a foam material capable of positioning the wood member with respect to the cylindrical member and filled in a clearance formed between an outer surface of the wood member and an inner wall surface of the cylindrical member partially or over the entirety thereof by foaming,
wherein the foamed foam material has a strength that does not prevent the cylindrical member from radially inwardly deforming when the cylindrical member is axially compressed with the wood member by the impact load.

2. The shock-absorbing member as defined in claim 1, wherein the foamed foam material is filled in the clearance formed between the outer surface of the wood member and the inner wall surface of the cylindrical member over the entirety thereof.

3. The shock-absorbing member as defined in claim 1 or 2, wherein the foam material has an expansion ratio of 5-fold to 30-fold.

4. The shock-absorbing member as defined in any one of claims 1 to 3, wherein the cylindrical member has a rectangular cylindrical shape, wherein the wood member has a rectangular columnar shape, and wherein the foamed foam material has uniform thickness.

5. The shock-absorbing member as defined in any one of claims 1 to 4, wherein the cylindrical member comprises an aluminum alloy molded article, wherein the wood member comprises a cedar wood member, and wherein the foam material comprises a rigid urethane foam.

6. The shock-absorbing member as defined in claim 5, wherein a wall thickness of the cylindrical member is a range from about 0.4 mm to about 1.1 mm, and wherein a thickness of the foam material is set to a range from about 2 mm to about 4 mm.
